# FASCICULE DE BREVET EUROPEEN

(11) **EP 1 158 159 B1**
(45) Date de publication et mention de la délivrance du brevet: **22.12.2004**
(21) Numéro de dépôt: 01440113.7
(22) Date de dépôt: 19.04.2001
(51) Int. Cl.: F02M 35/10

(54) **Collecteur ou répartiteur d'admission à plusieurs tubulures**
Saugrohranlage mit mehreren Leitungen
Intake manifold with multiple pipes

(30) Priorité: 26.05.2000 FR 0006772
(43) Date de publication de la demande: 28.11.2001
(73) Titulaire: Mark IV Systemes Moteurs (Société Anonyme), 92400 Courbevoie (FR)
(72) Inventeur: Corduan, Pascal, 68230 Walbach (FR); Faucheux, William, 44150 Saint Gereon (FR)
(74) Mandataire: Franzolin, Luigi

(56) Documents cités:
- EP-A- 0 992 674
- US-A- 4 175 504
- US-A- 5 636 605

## Description

La présente invention concerne le domaine des systèmes d'admission d'air ou de mélanges gazeux dans les moteurs thermiques, et a pour objet un collecteur ou répartiteur d'admission à plusieurs tubulures, plus simple à fabriquer que les collecteurs ou répartiteurs actuels qui présentent une constitution de niveau de complexité égal.

Actuellement pour produire des collecteurs ou répartiteurs d'admission à structure interne complexe, et notamment ceux intégrant des tubulures ou des portions de tubulures s'enroulant partiellement autour de la chambre ou du plénum pour gagner en encombrement, on procède généralement par assemblage de deux parties constitutives à structures plus simples assemblées entre-elles par soudage par exemple, notamment dans le cas de collecteurs ou de répartiteurs en matériau thermoplastique.

Toutefois, dans la plupart des cas, même la réalisation des parties constitutives plus simple par moulage peut s'avérer délicate et nécessiter la mise en oeuvre de moules et de procédés de moulage compliqués, entraînant en outre des contraintes au niveau des découpes des deux parties constitutives qui peuvent aboutir à des solutions non optimales des configurations des plans de joints, en termes de résistance d'assemblage et d'étanchéité.

Il a alors été proposé de subdiviser le collecteur ou répartiteur en plus de deux parties (3 ou 4) et à les assembler successivement entre elles pour constituer ledit collecteur ou répartiteur. Toutefois, ce dernier présente dans ce cas, du fait des nombreuses lignes de soudage, une structure non homogène et sujette à des risques de défauts d'étanchéité plus élevés, le procédé d'assemblage étant en outre également plus fastidieux.

US-A-5 636 605 et US-A-4 175 504 décrivent un collecteur d'admission selon les caractéristiques du préambule de la revendication 1.

La présente invention a pour but de proposer une structure de collecteur ou répartiteur qui permet de pallier les inconvénients précités, de simplifier ultérieurement les opérations d'assemblage vis-à-vis les collecteurs ou répartiteurs actuellement connus et, en outre, de améliorer l'étanchéité entre les parties constitutives et aussi la précision et la solidité de l'assemblage.

A cet effet, la présente invention a pour objet un collecteur ou répartiteur selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en coupe d'un collecteur ou répartiteur selon l'invention, au niveau d'une tubulure ;
les figures 2A, 2B et 2C sont respectivement des vues en élévation latérale, en élévation frontale et en perspective d'un insert constituant une partie de la tubulure représentée sur la figure 1, pour l'obtention d'une tubulure à section rectangulaire à coins arrondis ;
la figure 3 est une vue partielle en perspective de dessus de la partie inférieure du collecteur ou répartiteur selon l'invention, montrant notamment une partie d'un logement de réception d'un insert, et,
la figure 4 est une vue partielle en perspective de dessous de la partie supérieure du collecteur ou répartiteur selon l'invention, montrant notamment une partie d'un logement de réception d'un insert, complémentaire de la partie de logement représentée sur la figure 3.

Ainsi, l'invention concerne un collecteur ou répartiteur d'admission, notamment en matériau thermoplastique, obtenu par l'assemblage d'au moins deux parties constitutives fabriquées préalablement et comportant plusieurs tubulures d'admission formées avec ledit collecteur ou répartiteur.

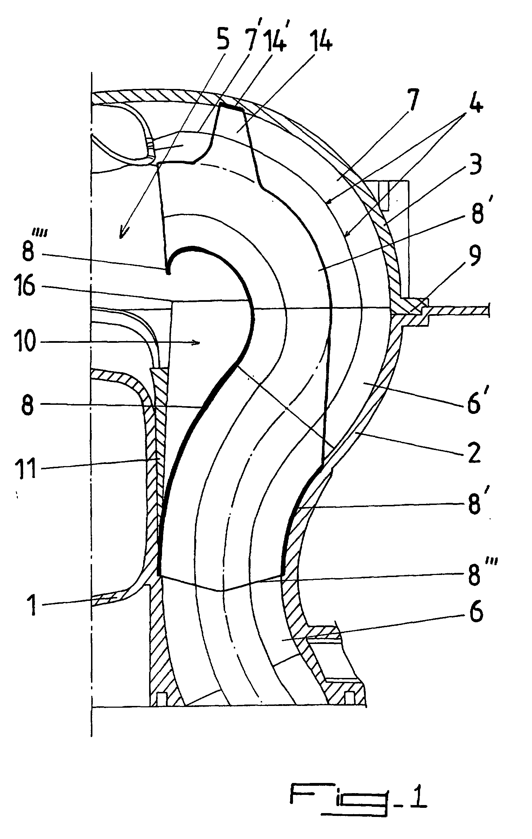

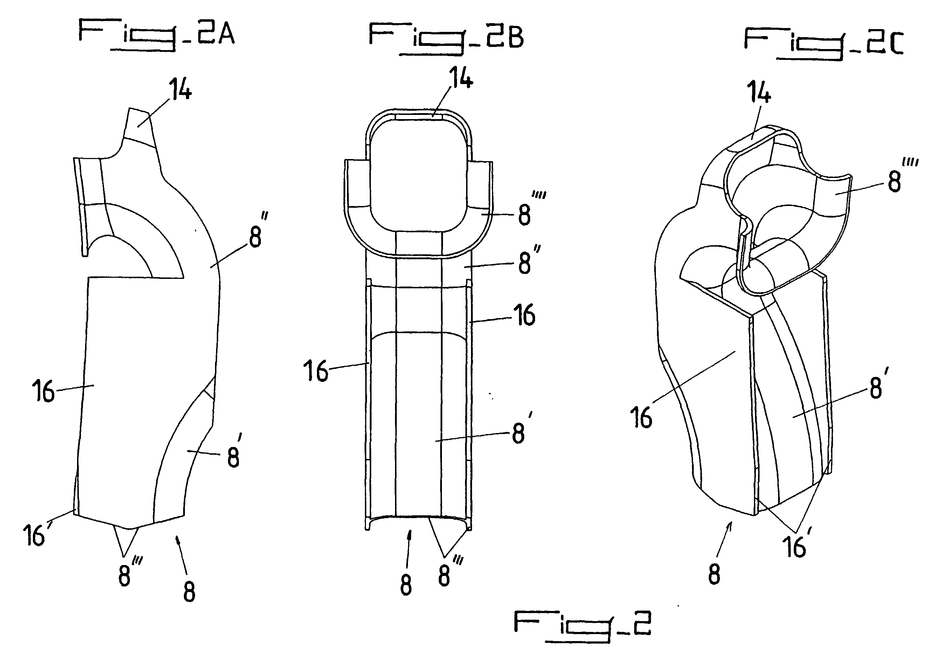

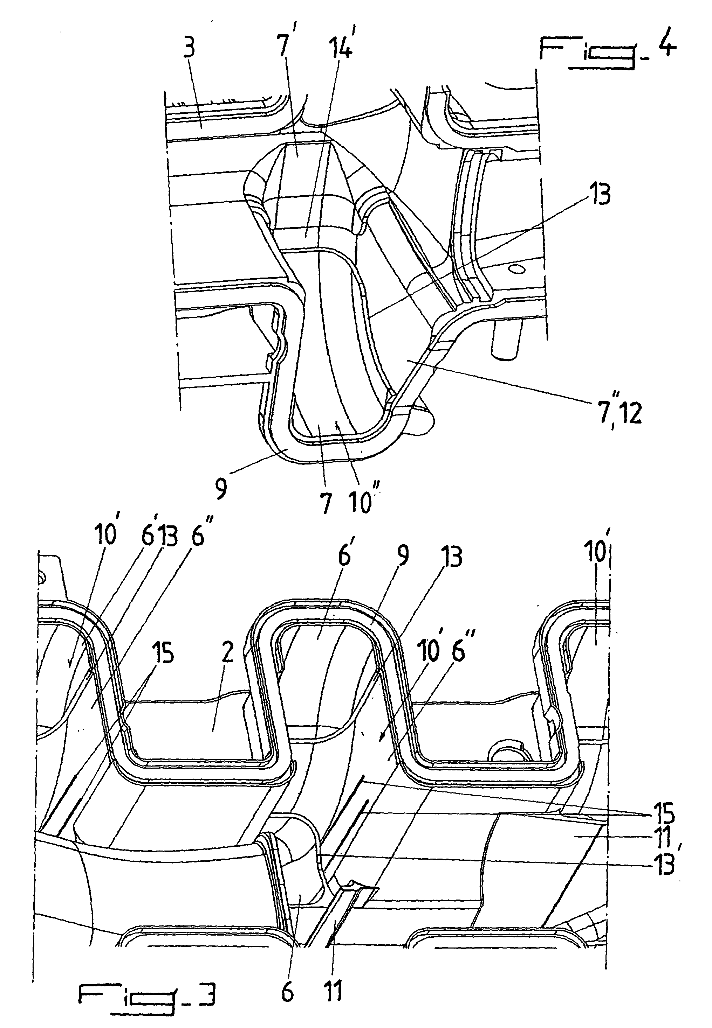

Conformément à l'invention, et comme le montrent notamment la figure 1 et les figures 2 à 4 prises ensemble, chaque tubulure d'admission 4 est au moins partiellement, et préférentiellement en totalité, constituée par coopération d'au moins une portion de paroi 6, 6' ; 7, 7' de l'une au moins des parties constitutives 2, 3 avec un insert 8 structurant, monté dans l'une desdites parties 2, 3 avant leur assemblage mutuel, maintenu en position entre elles après leur assemblage et formant au moins une portion de la paroi de la tubulure 4 concernée.

Selon un mode de réalisation préférentiel de l'invention, le collecteur ou répartiteur est constitué par deux parties, à savoir une partie inférieure 2 et une partie supérieure 3, assemblées par soudage au niveau d'une ligne de joint périphérique 9 appartenant à une surface d'assemblage, plane ou non, cette dernière traversant sensiblement transversalement les tubulures d'admission 4 qui s'étendent dans les deux parties constitutives 2 et 3, les parois de ces dernières formant des logements de réception 10 des inserts 8 et constituant une partie des parois desdites tubulures 4, complémentaire de celle formée par l'insert 8.

Les logements 10 constituent par conséquent des préformes partielles des tubulures 4 et fournissent notamment les parois externes et une partie des parois latérales desdites tubulures 4 (considérées en relation avec leur axe longitudinal et leur courbure), les parois opposées et complémentaires desdites tubulures étant fournies par les inserts 8.

On notera que les dispositions énoncées ci-dessus permettent, en jouant simultanément sur les formes des inserts 8 et celles des parties constitutives inférieure 2 et supérieure 3, ainsi que sur leurs plans de séparation respectifs, de découper en composantes de forme simple, et en particulier faciles à réaliser séparément une structure ou une forme a priori complexe, et ceci en n'effectuant qu'une opération d'assemblage par soudure, qui pourra être généralement réalisée dans un plan, donc très aisément.

En outre, en fonction des complexités globales des parties constitutives 2 et 3, induites par des conformations et des configurations particulières non liées aux tubulures 4, on pourra définir les inserts 8 avec des détails de structure et de configuration supplémentaires que n'auront pas à présenter lesdites parties 1 ou 2, tout en veillant néanmoins à toujours autoriser un montage aisé et rapide dudit insert 8 dans la partie inférieure 2.

Comme le montrent les figures 2 (2A à 2C) des dessins annexés en relation avec la figure 1, chaque insert 8 comprend, d'une part, une première portion tubulaire 8' formant à elle seule la paroi circonférentielle d'une portion de la tubulure 4 proche de sa sortie et, d'autre part, une seconde portion 8" présentant une surface ouverte et formant sensiblement la demi-paroi longitudinale interne d'une portion plus courbée de ladite tubulure 4, débouchant dans la chambre 5 dudit collecteur ou répartiteur 1, ledit insert 8 présentant une forme générale en cou de cygne dont la géométrie est adaptée à celle du logement 10 le recevant pour obtenir par complémentarité de formes une tubulure 4 à section constante ou variable.

La première portion tubulaire 8' permettra de rigidifier la structure de l'insert 8, de favoriser sa moulabilité et d'augmenter la précision dimensionnelle, tant au niveau de la phase de fabrication dudit insert 8 que de son positionnement dans le collecteur répartiteur 1.

La forme ouverte et la structure flexible de la seconde portion supérieure 8" autorisera une déformation élastique de l'insert 8 dans le sens de l'emboîtement et donc un blocage en position par compression dans la même direction lors de l'assemblage des deux parties constitutives 2 et 3.

Dans le cas particulier d'une tubulure 8 à section rectangulaire ou carrée, ladite seconde partie supérieure 8" pourra constituer la paroi interne et la moitié de chacune des deux parois latérales (considérées par rapport à la courbure de la tubulure concernée).

De plus, l'extrémité de ladite seconde portion 8" qui débouche dans la chambre 5 du collecteur ou répartiteur 1 pourra présenter des bords de paroi 8"" s'évasant vers l'extérieur pour favoriser l'entrée d'air dans la tubulure correspondante (la portion de paroi 7' de la partie supérieure 3 pourra comporter une configuration interne présentant un évasement similaire).

Conformément à une caractéristique de l'invention, représentée notamment aux figures 1 et 3 des dessins annexés, la portion tubulaire inférieure 8' de chaque insert 8 est emboîtée par son extrémité libre dans une partie de logement 10' ajustée, délimitée par la paroi de la partie inférieure 2 et une paroi de rétention interne 11, et repose, avec affleurement circonférentiel interne, sur une partie de conduit 6 formée dans la partie inférieure 2 du collecteur ou répartiteur 1 et constituant la portion terminale de sortie de la tubulure 4 concernée.

On obtient de cette manière, en direction de la sortie des tubulures 4, une zone présentant une double peau ou enveloppe assurant une rigidité augmentée, favorisant l'écoulement d'air avant l'entrée dans le cylindre par absence de discontinuité dans la section de passage, tout en garantissant un maintien mécanique par emboîtement ajusté.

Afin de garantir le maintien en position de l'insert 8 sur la totalité de sa hauteur et une absence de discontinuité de section entre les portions de tubulures 4 formées par l'enveloppe 10 et celles formées par l'insert 8 correspondant qui est reçu dans cette dernière, les parois de chaque logement de réception 10 pour insert 8 comporte une empreinte 12 correspondant à la forme extérieure dudit insert 8 et en ce que les zones de paroi 7" et 6" des parties supérieure 3 et inférieure 2 du collecteur ou répartiteur 1 formant ladite empreinte 12 et en contact avec l'insert 8 concerné, sont situées en retrait par rapport aux portions de parois 6, 6' ; 7, 7' constituant une partie de la paroi de la tubulure 4 et la partie terminale de sortie de cette dernière, la hauteur du décrochement 13, 13' entre lesdites zones et portions de paroi étant localement sensiblement égale à l'épaisseur locale de la paroi de l'insert 8.

Les dimensions des inserts 8 pourront avantageusement, notamment dans la direction longitudinale des tubulures 4 à former, être légèrement supérieures à celles des empreintes 12 des logements 10 correspondants, afin d'obtenir une légère compression desdits inserts après assemblage des parties constitutives 2 et 3 du collecteur ou répartiteur 1.

Pour faciliter la mise en place des inserts 8 dans les parties inférieures 2, il peut être prévu des configurations et des conformations entraînant un autopositionnement des inserts lors de leur emboîtement et un montage étanche par association de formes conjuguées entre lesdits inserts 8 et les parties de logement 10' des parties inférieures 2.

Selon une variante de réalisation préférentielle de l'invention, répondant au but précité, le décrochement 13' circonférentiel constituant le bord supérieur de la portion terminale de sortie 6 de la tubulure 4 et sur lequel repose l'extrémité libre de la portion tubulaire 8' de l'insert 8, présente un profil défini par deux plans de coupe transversaux, inclinés l'un par rapport à l'autre selon un angle obtus et sécants à l'intérieur du contour de la tubulure 8, le bord 8"' de l'extrémité libre de la portion tubulaire 8' de l'insert 8 présentant un profil complémentaire ajusté.

Dans le cas d'une tubulure à section rectangulaire au carré, la mesure précitée aboutira à deux parois latérales opposées dont les bords 8"' présenteront une longueur plus grande au centre et des longueurs plus courtes sur leurs côtés pour constituer une forme en pointe émoussée (un profil de forme complémentaire étant également possible - plus long sur les côtés et plus court au centre), les deux autres parois latérales opposées dudit insert 8 présentant une surface de tranche inclinée par rapport aux faces externes desdites parois (voir figures 1, 2A et 2C).

En outre, cette mesure permettra d'éviter toute mise en place de travers des inserts 8 lors de leur montage (fonction de détrompage), d'aboutir automatiquement à un positionnement final précis et empêchera toute rotation ou décalage de l'insert 8 lors d'un éventuel assemblage par soudage, par vibration des parties constitutives 2 et 3.

Conformément à une autre caractéristique de l'invention, représentée notamment aux figures 1, 2 et 4 des dessins annexés, la seconde portion supérieure 8" de l'insert 8 est prolongé, à proximité de l'extrémité de la tubulure 4 débouchant dans la chambre 5 dudit collecteur ou répartiteur 1, par une bande de paroi 14, en forme d'anse et bouclant localement la surface ouverte de ladite seconde portion supérieure 8" pour former un segment circonférentiellement fermé de ladite tubulure 8, qui est reçue avec blocage latéral dans une empreinte 14' de forme concordante ménagée dans la paroi de la partie supérieure 3 dudit collecteur ou répartiteur 1.

Avantageusement, les inserts 8 et leurs logements de réception 10 correspondants pourront être, comme déjà indiqué précédemment être conformés et dimensionnés de telle manière que, à l'état assemblé, chaque insert 8 soit bloqué en position sous contrainte élastique par des appuis opposés, d'une part, de la première portion tubulaire 8' sur la partie inférieure 2 dudit collecteur ou répartiteur 1 et, d'autre part, de la bande de paroi 14 en forme d'anse sur la partie supérieure 3 dudit collecteur ou répartiteur 1.

On notera également que les possibilités de déformation élastique de la bande de paroi 14 autoriseront des jeux à l'assemblage des parties 2 et 3, sans pour autant compromettre le blocage de l'insert 8, et donc l'étanchéité et l'absence de vibration pour les tubulures 8 composites.

En effet, la compression de ladite bande de paroi 14 (du fait d'un surdimensionnement de l'insert 8 par rapport à l'empreinte 12, 14') génèrera un effet ressort verrouillant le montage par emboîtement, assurant la stabilité dudit insert 8 et supprimant les jeux et les bruits après assemblage des parties 2 et 3.

De plus, la réception de l'insert 8 dans une empreinte de forme complémentaire permet d'obtenir une très bonne étanchéité par contact surfacique, ainsi qu'une bonne continuité de la surface interne de la tubulure.

En outre, le surdimensionnement de l'insert 8 par rapport à son empreinte de réception peut, en outre, entraîner, dans le cas d'un assemblage des parties constitutives 2 et 3 par soudage par vibration, un soudage simultané de certaines portions dudit insert 8 avec des zones adjacentes et en contact intime desdites parties 2 et 3.

Comme le montre la figure 3 des dessins annexés, les faces internes des parois des logements de réception 10 des inserts 8 de la partie inférieure 2 et/ou de la partie supérieure 3 dudit collecteur ou répartiteur 1 comportent, préférentiellement sur des portions de parois opposées, des nervures 15, saillantes vers l'intérieur et s'étendant dans une direction sensiblement parallèle à la direction de montage par emboîtement de l'insert 8 dans la partie inférieure 2 dudit collecteur ou répartiteur 1, destinés à réaliser un serrage par compression et, le cas échéant, par déformation élastique des parois des portions inférieure 8' et/ou supérieure 8" desdits inserts 8, lesdites nervures 15 présentant, le cas échéant, des hauteurs variables, en fonction de la capacité de déformation élastique locale de la paroi des inserts 8 correspondants.

En outre, la paroi de la partie de logement 10' de la partie inférieure 2 pourra comporter sur sa face interne une gorge ou une rainure s'étendant sous la ligne de joint 9 et destinée à recueillir la matière fondue résultant de l'assemblage par soudage par vibration des parties 2 et 3.

Conformément à une caractéristique supplémentaire, les parois des première et seconde portions 8' et 8" de chaque insert 8 sont prolongées, sur leurs faces latérales externes par des projections 16 en forme de plaques flexibles opposées, augmentant la surface de contact entre l'insert 8 et les parois latérales des logements de réception 10 et contribuant, au moins par certains de leurs bords, au blocage en position de l'insert 8 dans son logement 10, lesdites plaques 16 s'étendant, après montage de l'insert 8, au moins jusqu'au plan ou à la ligne de joint 9 des parties inférieure 2 et supérieure 3 dudit collecteur ou répartiteur 1, mais sans rejoindre l'extrémité libre de la seconde portion 8" de l'insert 8 débouchant dans la chambre 5 dudit collecteur ou répartiteur 1 (pour conserver la flexibilité et l'élasticité de ladite seconde portion 8").

On notera notamment que la partie inférieure 16' du bord avant desdites plaques 16 pourra venir en butée, lors de l'emboîtement de l'insert 8 contre la plaque de maintien 11 (figures 1 et 2A et 2C).

En outre, lesdites plaques opposées 16 pourront servir de cache-bavure interne, rigidifient la partie des inserts dont elles constituent des projections et participent positivement au maintien des inserts 8 dans les parties de logement 10', en compensant les éventuels effets néfastes des jeux et tolérances existants entre les différentes parties à assembler.

Par ailleurs, on notera que, dans le cas d'un assemblage des parties 2 et 3 par soudage par vibration, la matière fondue au niveau de la ligne de joint 9 pourra entrer en contact avec l'insert 8 et assurer ainsi également l'assemblage par soudure de ce dernier avec lesdites parties 2 et 3 (assemblage simultané d'au moins trois pièces en une seule opération).

La présente invention a également pour objet un procédé de fabrication simplifié d'un collecteur ou répartiteur d'admission 1 intégrant plusieurs tubulures 4 dans sa structure, notamment en matériau thermoplastique, par assemblage de deux parties 2 et 3 préfabriquées.

Ce procédé est principalement caractérisé en ce qu'il consiste à fournir une partie inférieure 2 et une partie supérieure 3 formant couvercle, délimitant par coopération des logements 10 de tubulures 8, à monter par emboîtement dans les parties 10' desdits logements 10 situées dans la partie inférieure 2 du collecteur ou répartiteur 1 des inserts 8 structurants, puis à assembler par vibration la partie supérieure 3 sur la partie inférieure 1 notamment le long d'une ligne de joint ou de soudage 9 périphérique, en bloquant les inserts 8 dans leur logement 10 par compression entre les parties supérieure 3 et inférieure 2, chaque tubulure 4 étant constituée par coopération d'au moins une portion de paroi 6, 6' ; 7, 7' de l'une au moins desdites deux parties constitutives 2 et 3 avec un insert 8 correspondant, de forme complémentaire.

Les différentes dispositions et caractéristiques exposées ci-dessus en relation avec le collecteur ou répartiteur 1 pourront bien entendu, le cas échéant, également trouver application dans le cadre du procédé de fabrication précité.

## Revendications

1. Collecteur ou répartiteur d'admission, notamment en matériau thermoplastique, obtenu par l'assemblage d'au moins deux parties constitutives fabriquées préalablement et comportant plusieurs tubulures d'admission formées avec ledit collecteur ou répartiteur, **caractérisé en ce** chaque tubulure d'admission (4) étant au moins partiellement, et préférentiellement en totalité, constituée par coopération d'au moins une portion de paroi (6, 6' ; 7, 7') de l'une au moins des parties constitutives (2, 3) avec un insert (8) structurant, monté dans l'une desdites parties (2, 3) avant leur assemblage mutuel, maintenu en position entre elles après leur assemblage et formant au moins une portion de la paroi de la tubulure (4) concernée,
**caractérisé en ce qu'**il est constitué par deux parties, à savoir une partie inférieure (2) et une partie supérieure (3), assemblées par soudage au niveau d'une ligne de joint périphérique (9) appartenant à une surface d'assemblage, plane ou non, cette dernière traversant sensiblement transversalement les tubulures d'admission (4) qui s'étendent dans les deux parties constitutives (2 et 3), les parois de ces dernières formant des logements de réception (10) des inserts (8) et constituant une partie des parois desdites tubulures (4), complémentaire de celle formée par l'insert (8).

2. Collecteur ou répartiteur selon la revendication 1, **caractérisé en ce que** chaque insert (8) comprend, d'une part, une première portion tubulaire (8') formant à elle seule la paroi circonférentielle d'une portion de la tubulure (4) proche de sa sortie et, d'autre part, une seconde portion (8") présentant une surface ouverte et formant sensiblement la demi paroi longitudinale interne d'une portion plus courbée de ladite tubulure (4), débouchant dans la chambre (5) dudit collecteur ou répartiteur (1), ledit insert (8) présentant une forme générale en cou de cygne dont la géométrie est adaptée à celle du logement (10) le recevant pour obtenir par complémentarité de formes une tubulure (4) à section constante ou variable.

3. Collecteur ou répartiteur selon la revendication 2, **caractérisé en ce que** la portion tubulaire inférieure (8') de chaque insert (8) est emboîtée par son extrémité libre dans une partie de logement (10') ajustée, délimitée par la paroi de la partie inférieure (2) et une paroi de rétention interne (11), et repose, avec affleurement circonférentiel interne, sur une partie de conduit (6) formée dans la partie inférieure (2) du collecteur ou répartiteur (1) et constituant la portion terminale de sortie de la tubulure (4) concernée.

4. Collecteur ou répartiteur selon les revendications 2 et 3, **caractérisé en ce que** les parois de chaque logement de réception (10) pour insert (8) comporte une empreinte (12) correspondant à la forme extérieure dudit insert (8) et **en ce que** les zones de paroi (7" et 6") des parties supérieure (3) et inférieure (2) du collecteur ou répartiteur (1) formant ladite empreinte (12) et en contact avec l'insert (8) concerné, sont situées en retrait par rapport aux portions de parois (6, 6' ; 7, 7') constituant une partie de la paroi de la tubulure (4) et la partie terminale de sortie de cette dernière, la hauteur du décrochement (13, 13') entre lesdites zones et portions de paroi étant localement sensiblement égale à l'épaisseur locale de la paroi de l'insert (8).

5. Collecteur ou répartiteur selon les revendications 3 et 4, **caractérisé en ce que** le décrochement (13') circonférentiel constituant le bord supérieur de la portion terminale de sortie (6) de la tubulure (4) et sur lequel repose l'extrémité libre de la portion tubulaire (8') de l'insert (8), présente un profil défini par deux plans de coupe transversaux, inclinés l'un par rapport à l'autre selon un angle obtus et sécants à l'intérieur du contour de la tubulure (8), le bord (8"') de l'extrémité libre de la portion tubulaire (8') de l'insert (8) présentant un profil complémentaire ajusté.

6. Collecteur ou répartiteur selon l'une quelconque des revendications 2 à 5, **caractérisé en ce que** la seconde portion supérieure (8") de l'insert (8) est prolongé, à proximité de l'extrémité de la tubulure (4) débouchant dans la chambre (5) dudit collecteur ou répartiteur (1), par une bande de paroi (14), en forme d'anse et bouclant localement la surface ouverte de ladite seconde portion supérieure (8") pour former un segment circonférentiellement fermé de ladite tubulure (8), qui est reçue avec blocage latéral dans une empreinte (14') de forme concordante ménagée dans la paroi de la partie supérieure (3) dudit collecteur ou répartiteur (1).

7. Collecteur ou répartiteur selon les revendications 2 et 6, **caractérisé en ce que**, à l'état assemblé, chaque insert (8) est bloqué en position sous contrainte élastique par des appuis opposés, d'une part, de la première portion tubulaire (8') sur la partie inférieure (2) dudit collecteur ou répartiteur (1) et, d'autre part, de la bande de paroi (14) en forme d'anse sur la partie supérieure (3) dudit collecteur ou répartiteur (1).

8. Collecteur ou répartiteur selon l'une quelconque des revendications précédentes, **caractérisé en ce que** les faces internes des parois des logements de réception (10) des inserts (8) de la partie inférieure (2) et/ou de la partie supérieure (3) dudit collecteur ou répartiteur (1) comportent, préférentiellement sur des portions de parois opposées, des nervures (15), saillantes vers l'intérieur et s'étendant dans une direction sensiblement parallèle à la direction de montage par emboîtement de l'insert (8) dans la partie inférieure (2) dudit collecteur ou répartiteur (1), destinés à réaliser un serrage par compression et, le cas échéant, par déformation élastique des parois des portions inférieure (8') et/ou supérieure (8") desdits inserts (8), lesdites nervures (15) présentant, le cas échéant, des hauteurs variables, en fonction de la capacité de déformation élastique locale de la paroi des inserts (8) correspondants.

9. Collecteur ou répartiteur selon la revendication 2, **caractérisé en ce que** les parois des première et seconde portions (8' et 8") de chaque insert (8) sont prolongées, sur leurs faces latérales externes par des projections (16) en forme de plaques flexibles opposées, augmentant la surface de contact entre l'insert (8) et les parois latérales des logements de réception (10) et contribuant, au moins par certains de leurs bords, au blocage en position de l'insert (8) dans son logement (10), lesdites plaques (16) s'étendant, après montage de l'insert (8), au moins jusqu'au plan ou à la ligne de joint (9) des parties inférieure (2) et supérieure (3) dudit collecteur ou répartiteur (1), mais sans rejoindre l'extrémité libre de la seconde portion (8") de l'insert (8) débouchant dans la chambre (5) dudit collecteur ou répartiteur (1).

10. Procédé de fabrication d'un collecteur ou répartiteur d'admission intégrant plusieurs tubulures dans sa structure, notamment en matériau thermoplastique, par assemblage de deux parties préfabriquées, **caractérisé en ce qu'**il consiste à fournir une partie inférieure (2) et une partie supérieure (3) formant couvercle, délimitant par coopération des logements (10) de tubulures (8), à monter par emboîtement dans les parties (10') desdits logements (10) situées dans la partie inférieure (2) du collecteur ou répartiteur (1) des inserts (8) structurants, puis à assembler par vibration la partie supérieure (3) sur la partie inférieure (1) notamment le long d'une ligne de joint ou de soudage (9) périphérique, en bloquant les inserts (8) dans leur logement (10) par compression entre les parties supérieure (3) et inférieure (2), chaque tubulure (4) étant constituée par coopération d'au moins une portion de paroi (6, 6' ; 7, 7') de l'une au moins desdites deux parties constitutives (2 et 3) avec un insert (8) correspondant, de forme complémentaire.

## Claims

1. Intake manifold or distributor, especially made from thermoplastic, obtained by assembling at least two prefabricated component parts comprising a plurality of intake conduits formed with the said manifold or distributor, each intake conduit (4) being at least partially and preferably completely formed as a result of the cooperation of at least one wall portion (6, 6'; 7, 7') of at least one of the component parts (2, 3) with a structuring insert (8) which is mounted in one of the said parts (2, 3) before their mutual assembly and is held in position between them after their assembly and which forms at least one portion of the wall of the conduit (4) in question, **characterized in that** it consists of two parts, to be precise a lower part (2) and an upper part (3), assembled by welding at a peripheral parting line (9) belonging to a plane or non-plane assembly surface, the latter passing substantially transversely through the intake conduits (4) which extend in the two component parts (2 and 3), the walls of the latter forming receptacles (10) for the reception of the inserts (8) and constituting a part of the walls of the said conduits (4) which is complementary to that formed by the insert (8).

2. Manifold or distributor according to Claim 1, **characterized in that** each insert (8) comprises, on the one hand, a first tubular portion (8') which alone forms the circumferential wall of a portion of the conduit (4) near the exit of the latter and, on the other hand, a second portion (8'') having an open surface and forming substantially the inner longitudinal half-wall of a more curved portion of the said conduit (4), which portion issues into the chamber (5) of the said manifold or distributor (1), the said insert (8) having a general swanneck shape, the geometry of which is adapted to that of the receptacle (10) receiving it, in order by complementarity of shapes to obtain a conduit (4) of constant or variable cross section.

3. Manifold or distributor according to Claim 2, **characterized in that** the lower tubular portion (8') of each insert (8) is engaged with its free end in a matched receptacle part (10') delimited by the wall of the lower part (2) and an inner retaining wall (11) and rests with an inner circumferential flush fit on a duct part (6) formed in the lower part (2) of the manifold or distributor (1) and constituting the end exit portion of the conduit (4) in question.

4. Manifold or distributor according to Claims 2 and 3, **characterized in that** the walls of each reception receptacle (10) for the insert (8) comprise an indentation (12) corresponding to the outer shape of the said insert (8), and **in that** the wall zones (7'' and 6'') of the upper (3) and lower (2) parts of the manifold or distributor (1) which form the said indentation (12) and are in contact with the insert (8) in question are set back with respect to the wall portions (6, 6'; 7, 7') constituting part of the wall of the conduit (4) and the end exit part of the latter, the height of the offset (13, 13') between the said wall zones and wall portions being locally substantially equal to the local thickness of the wall of the insert (8).

5. Manifold or distributor according to Claims 3 and 4, **characterized in that** the circumferential offset (13') which forms the upper edge of the end exit portion (6) of the conduit (4) and on which the free end of the tubular portion (8') of the insert (8) rests has a profile defined by two transverse sectional planes inclined with respect to one another at an obtuse angle and secant to the interior of the contour of the conduit (8), the edge (8''') of the free end of the tubular portion (8') of the insert (8) having a matched complementary profile.

6. Manifold or distributor according to any one of Claims 2 to 5, **characterized in that** the second upper portion (8'') of the insert (8) is prolonged, in the vicinity of the end of the conduit (4) issuing into the chamber (5) of the said manifold or distributor (1), by a handle-shaped wall strip (14) locally looping the open surface of the said second upper portion (8''), to form a closed circumferential segment of the said conduit (8), which is received with lateral locking in an indentation (14') of conforming shape made in the wall of the upper part (3) of the said manifold or distributor (1).

7. Manifold or distributor according to Claims 2 and 6, **characterized in that**, in the assembled state, each insert (8) is locked in position under elastic stress by opposed bearing contacts, on the one hand, of the first tubular portion (8') on the lower part (2) of the said manifold or distributor (1) and, on the other hand, of the handle-shaped wall strip (14) on the upper part (3) of the said manifold or distributor (1).

8. Manifold or distributor according to any one of the preceding claims, **characterized in that** the inner faces of the walls of the receptacles (10) for the reception of the inserts (8) of the lower part (2) and/or of the upper part (3) of the said manifold or distributor (1) comprise, preferably on opposite wall. portions, ribs (15) projecting inwards and extending in a direction substantially parallel to the direction of mounting by the engagement of the insert (8) in the lower part (2) of the said manifold or distributor (1) which are intended for implementing clamping by compression and, if appropriate, by elastic deformation of the walls of the lower (8') and/or upper (8'') portions of the said inserts (8), the said ribs (15) having, if appropriate, variable heights as a function of the local elastic deformation capacity of the wall of the corresponding inserts (8).

9. Manifold or distributor according to Claim 2, **characterized in that** the walls of the first and second portions (8' and 8'') of each insert (8) are prolonged, on their outer lateral faces, by projections (16) in the form of opposite flexible plates, increasing the contact surface between the insert * (8) and the lateral walls of the reception receptacles (10) and contributing, at least with some of their edges, to the locking of the insert (8) in position in its receptacle (10), the said plates (16) extending, after the mounting of the insert (8), at least as far as the parting plane or line (9) of the lower (2) and upper (3) parts of the said manifold or distributor (1), but without meeting the free end of the second portion (8'') of the insert (8) issuing into the chamber (5) of the said manifold or distributor (1).

10. Method for the manufacture of an intake manifold or distributor incorporating a plurality of conduits in its structure, especially made from thermoplastic, by assembling two prefabricated parts, **characterized in that** it involves supplying a lower part (2) and an upper part (3) forming a cover, which by cooperation delimit receptacles (10) of conduits (8), mounting structuring inserts (8) by engagement in those parts (10') of the said receptacles (10) which are located in the lower part (2) of the manifold or distributor (1), then assembling by vibration the upper part (3) on the lower part (1) especially along a peripheral parting (2) or welding line (9) by locking the inserts (8) in their receptacles (10) as a result of compression between the upper (3) and lower (2) parts, each conduit (4) being formed as a result of the cooperation of at least one wall portion (6, 6'; 7, 7') of at least one of the said two component parts (2 and 3) with a corresponding insert (8) of complementary shape.

## Patentansprüche

1. Ansaugkrümmer oder Ansaugverteiler, insbesondere aus thermoplastlschem Material, gebildet durch das Zusammenbauen wenigstens zweier vorgefertigter Bauteile und mit mehreren Ansaugrohren, die mit dem Krümmer oder Verteiler ausgebildet sind, wobei jedes Ansaugrohr (4) zumindest teilweise, und vorzugsweise vollständig, durch das Zusammenwirken mindestens eines Wandbereichs (6, 6'; 7, 7') wenigstens elnes der Bautelle (2, 3) mit einem strukturierenden Einsatz (8) gebildet ist, der in eines der beiden Bautelle (2, 3) vor deren Zusammenbau montiert wird, nach deren Zusammenbau in seiner Position zwischen diesen gehalten ist und zumindest einen Bereich der Wand des jeweiligen Rohrs (4) bildet, **dadurch gekennzeichnet, daß** er durch zwei Teile gebildet ist, nämlich einem unteren Teil (2) und einem oberen Teil (3), die durch Verschweißen an einer Umfangsverbindungslinie (9) zusammengefügt sind, welche zu einer ebenen oder nicht ebenen Montagefläche gehört, wobei letztere zu den Ansaugrohren (4), die sich in den belden Bauteilen (2 und 3) erstrecken, im wesentlichen in Querrichtung verläuft, wobei die Wände der letzteren Aufnahmen (10) für die Einsätze (8) bilden und elnen Bereich der Wände der Rohre (4) bilden, der zu dem durch den Einsatz (8) gebildeten Teil komplementär ist.

2. Ansaugkrümmer oder -verteiler nach Anspruch 1, **dadurch gekennzeichnet, daß** jeder Einsatz (8) einerseits einen ersten rohrförmigen Bereich (8'), der allein die Umfangswand eines Teils des Rohrs (4) nahe seinem Auslaß bildet, und andererseits einen zweiten Bereich (8") aufweist, der eine offene Fläche hat und im wesentlichen die halbe innere Längswand eines stärker gekrümmten Teils des Rohrs (4) bildet, der in die Kammer (5) des Krümmers oder Verteilers (1) mündet, wobei der Einsatz (8) generell Schwanenhalsform aufweist, deren Geometrie an diejenige der ihn aufnehmenden Aufnahme (10) angepaßt ist, um durch die Komplementarität der Formen ein Rohr (4) mit konstantem oder variablem Querschnitt zu erhalten.

3. Ansaugkrümmer oder -verteiler nach Anspruch 2, **dadurch gekennzeichnet, daß** der untere rohrförmige Bereich (8') jedes Einsatzes (8) mit seinem freien Ende in ein angepaßtes Aufnahmeteil (10') eingesetzt ist, das durch die Wand des unteren Teils (2) und eine innere Rückhaltewand (11) begrenzt ist, und innenumfangsmäßig bündig auf einem im unteren Teil (2) des Krümmers oder Verteilers (1) gebildeten Leitungsteil (6) ruht, weiches den Auslaßendbereich des betreffenden Rohrs (4) bildet.

4. Ansaugkrümmer oder -verteiler nach den Ansprüchen 2 und 3, **dadurch gekennzeichnet, daß** die Wände jeder Aufnahme (10) für einen Einsatz (8) eine Vertiefung (12) aufweist, die der Außenform des Einsatzes (8) entspricht, und daß die Wandzonen (7" und 6") des oberen (3) und des unteren Teils (2) des Krümmers oder Verteilers (1), weiche die Vertiefung (12) bilden und in Kontakt mit dem betreffenden Einsatz (8) stehen, gegenüber den Wandbereichen (6, 6'; 7, 7') zurückspringen, welche einen Teil der Wand des Rohres (4) und den Auslaßendbereich desselben bilden, wobei die Höhe des Versatzes (13, 13') zwischen den Zonen und Bereichen der Wand lokal im wesentlichen gleich der lokalen Dicke der Wand des Einsatzes (8) ist.

5. Ansaugkrümmer oder -verteiler nach den Ansprüchen 3 und 4, **dadurch gekennzeichnet, daß** der umfangsmäßige Versatz (13'), der den oberen Rand des Auslaßendbereichs (6) des Rohrs (4) bildet und auf welchem das freie Ende des rohrförmigen Bereichs (8') des Einsatzes (8) ruht, ein Profil aufweist, das durch zwei transversale Schnittebenen definiert ist, weiche zueinander unter einem stumpfen Winkel geneigt sind und sich im Inneren der Kontur des Einsatzes (8) schneiden, wobei der Rand (8''') des freien Endes des rohrförmigen Bereichs (8') des Einsatzes (8) ein angepaßtes komplementäres Profil aufweist.

6. Ansaugkrümmer oder -verteiler nach einem der Ansprüche 2 bis 5, **dadurch gekennzeichnet, daß** der zweite obere Teil (8") des Einsatzes (8) nahe dem Ende des in die Kammer (5) des Krümmers oder Verteilers (1) mündenden Rohres (4) durch einen Wandstreifen (14) in Form eines Bügels verlängert, der die offene Fläche des zweiten oberen Teils (8") lokal umschließt, um einen umfangsmäßig geschlossenen Abschnitt des Einsatzes (8) zu bilden, der mit seitlicher Verriegelung in einer Vertiefung (14') mit entsprechender Form aufgenommen ist, welche in der Wand des oberen Teils (3) des Krümmers oder Verteilers (1) ausgebildet ist.

7. Ansaugkrümmer oder -verteiler nach den Ansprüchen 2 und 6, **dadurch gekennzeichnet, daß** im montierten Zustand jeder Einsatz (8) in seiner Position unter elastischer Spannung durch gegenüberliegende Lagerung einerseits des ersten rohrförmigen Bereichs (8') auf dem unteren Teil (2) des Krümmers oder Verteilers (1) und andererseits des bügelförmigen Wandstreifens (14) auf dem oberen Teil (3) des Krümmers oder Verteilers (1).

8. Ansaugkrümmer oder -verteiler nach einem der vorhergehenden Ansprüche, **dadurch gekennzeichnet, daß** die Innenseiten der Wände der Einsatzaufnahmen (10) des unteren Teils (2) und/oder des oberen Teils (3) des Krümmers oder Verteilers (1) vorzugsweise auf gegenüberliegenden Wandbereichen Rippen (15) aufweisen, die nach innen vorstehen und sich im wesentlichen parallel zur Richtung der Einsetzmontage des Einsatzes (8) in das untere Teil (2) des Krümmers oder Verteilers (1) erstrecken, und welche zum Bewirken einer Klemmung durch Kompression und, gegebenenfalls, durch elastische Verformung der Wände der unteren (8') und/oder oberen Bereiche (8") der Einsätze (8) vorgesehen sind, wobei die Rippen (15) gegebenenfalls abhängig von der lokalen elastischen Verformbarkeit der Wand der entsprechenden Einsätze (8) variable Höhen haben.

9. Ansaugkrümmer oder -verteiler nach Anspruch 2, **dadurch gekennzeichnet, daß** die Wände des ersten und des zweiten Teils (8' und 8") jedes Einsatzes (8) an ihren äußeren Seitenflächen durch Vorsprünge (16) in Form einander gegenüberliegender flexibler Platten verlängert sind, welche die Kontaktfläche zwischen dem Einsatz (8) und des Seitenwänden der Aufnahmen (10) vergrößern und zumindest mit einigen ihrer Ränder zur Fixierung des Einsatzes (8) in seiner Aufnahme (10) beitragen, wobei die genannten Platten (16) sich nach der Montage des Einsatzes (8) zumindest bis zu der Verbindungsebene oder -linie (9) des unteren (2) und des oberen Teils (3) des Krümmers oder Verteilers (1) erstrecken, jedoch ohne an das freie Ende des zweiten Bereichs (8''') des Einsatzes (8) anzuschließen, der in die Kammer (5) des Krümmers oder Verteilers (1) mündet.

10. Verfahren zur Herstellung eines Ansaugkrümmers oder -verteilers mit mehreren in den Aufbau integrierten Rohren, insbesondere aus thermoplastischem Material, durch Zusammenbauen zweier vorgefertigter Teile, **dadurch gekennzeichnet, daß** es umfaßt: das Vorsehen eines unteren Teils (2) und eines eine Abdeckung bildenden oberen Teils (3), welche welche durch Zusammenwirken Aufnahmen (10) für Rohre (8) bilden, Montieren von strukturierenden Einsätzen (8) durch Einsetzen in die Teile (10') der Aufnahmen (10), welche sich im unteren Teil (2) des Krümmers oder Verteilers (1) befinden, anschließendes Anbringen des oberen Teils (3) an dem unteren Teil (2) durch Vibration, insbesondere entlang einer umfangsmäßigen Verbindungs- oder Schweißlinie (9), indem die Einsätze (8) in Ihren Aufnahmen (10) durch Kompression zwischen dem oberen (3) und dem unteren Teil (2) verriegelt werden, wobei jedes Rohr (4) durch das Zusammenwirken wenigstens eines Wandbereichs (6, 6'; 7, 7') zumindest eines der beiden Bauteile mit einem entsprechenden Einsatz (8) mit komplementärer Form gebildet wird.
